# DEMANDE DE BREVET EUROPEEN

(11) **EP 2 273 085 A1**
(43) Date de publication de la demande: **12.01.2011**
(21) Numéro de dépôt: 10168578.2
(22) Date de dépôt: 06.07.2010
(51) Int. Cl.: F01N 5/04, F02B 37/00, F02B 37/18, F02B 37/24, F01D 15/10, F02B 63/04, F02B 37/013

(54) **Système avec génératrice électrique et turbine pour la récupération d'énergie contenue dans les gaz d'échappement d'un moteur thermique**

(30) Priorité: 08.07.2009 FR 0954710
(71) Demandeur: Thy Engineering, 62700 Bruay la Bussière (FR)
(72) Inventeur: Lefevre, Thierry, 88000, Dogneville (FR); Ceppi, Jérôme, 38460, Annoisin-Chatelans (FR)
(74) Mandataire: Brungard, Yves Francois

(57) **Abrégé**

Un système de récupération d'énergie contenue dans les gaz d'échappement d'un moteur (E) thermique comporte une génératrice électrique (10) et une première turbine (11), un arbre étant commun à un rotor de la génératrice électrique (10) et une roue de la turbine (11). Le système comporte en outre une deuxième turbine (12), une roue de la deuxième turbine (12) étant montée sur l'arbre à l'extrémité opposée à la première roue.

## Description

### DOMAINE DE L'INVENTION

L'invention concerne un système avec génératrice électrique et turbine pour la récupération d'énergie contenue dans les gaz d'échappement d'un moteur thermique.

### TECHNIQUE ANTÉRIEURE

Les moteurs thermiques à combustion interne tels que les moteurs à pistons ou les moteurs rotatifs, qu'ils soient du type Diesel ou à allumage commandé, fournissent des gaz d'échappements contenants encore de l'énergie. Ils sont fréquemment équipés de turbocompresseurs qui utilisent une partie de cette énergie pour compresser l'air d'alimentation du moteur. Ainsi, la part d'énergie récupérée est fonction des besoins de compression de l'air d'alimentation.

On connaît par le document EP 1 355 051 un système de récupération d'énergie contenue dans les gaz d'échappement d'un moteur à combustion interne. Le système comporte un turbocompresseur et une génératrice électrique entraînée par une turbine secondaire recevant le flux de gaz d'échappement sortant de la turbine du turbocompresseur. L'énergie électrique fournie est utilisée à bord du véhicule. La turbine secondaire est à géométrie variable pour adapter l'énergie fournie à la génératrice électrique par rapport aux besoins de consommation électrique.

Un tel système ne permet pas une utilisation optimale de l'énergie des gaz d'échappement. En effet, si la turbine secondaire est dimensionnée pour récupérer l'énergie des gaz d'échappement lorsque le moteur fonctionne à forte charge, elle sera mal adaptée pour récupérer de l'énergie des gaz lorsque le moteur fonctionne à faible charge.

### OBJECTIFS DE L'INVENTION

L'invention vise à fournir un système de récupération d'énergie d'un moteur thermique permettant de récupérer une grande part de l'énergie des gaz d'échappement du moteur thermique, dans une grande plage de fonctionnement du moteur.

### EXPOSÉ DE L'INVENTION

Avec ces objectifs en vue, l'invention a pour objet un système de récupération d'énergie contenue dans les gaz d'échappement d'un moteur thermique, le système comportant une génératrice électrique et une première turbine, un arbre étant commun à un rotor de la génératrice et une roue de la turbine. Le système comporte en outre une deuxième turbine, une deuxième roue de la deuxième turbine étant montée sur l'arbre à l'extrémité opposée à la première roue.

En utilisant deux turbines au lieu d'une pour entraîner la génératrice électrique, on a la possibilité d'ajuster sur une grande plage de fonctionnement l'utilisation des gaz d'échappement, comme on le verra mieux par la suite. En comparaison avec un système selon l'art antérieur avec une seule turbine, le système selon l'invention permet de récupérer plus d'énergie. Autrement dit, il permet de récupérer de l'énergie sur une plus grande plage de fonctionnement du moteur thermique tout en améliorant le rendement global tant du système de récupération d'énergie que du moteur lui même par un meilleur contrôle de la contre-pression. Par ailleurs, la disposition des roues des turbines sur le même arbre, avec le rotor de la génératrice encadré par les roues des turbines permet un encombrement minimal et un équilibre optimal des charges sur l'arbre. En effet, il est possible de placer des paliers entre le rotor de la génératrice et les roues, ce qui place les paliers au plus près des roues et limite le porte-à-faux entre le palier et la roue.

Dans un premier mode de réalisation, la première turbine comporte une entrée et une sortie pour des gaz, la deuxième turbine comporte une entrée et une sortie pour des gaz, la sortie de la première turbine étant connectée à l'entrée de la deuxième turbine par une conduite de transfert. Les turbines sont ainsi connectées en série, ce qui permet de réaliser plusieurs étages de détente pour les gaz d'échappement et de récupérer au maximum leur énergie.

Selon un deuxième mode de réalisation, chaque turbine comporte au moins une entrée, le système comportant une conduite d'alimentation qui relie les entrées de la première et de la deuxième turbine pour alimenter les turbines en parallèle.

Selon un perfectionnement, le système comporte une vanne de sélection en amont ou en aval de l'une des turbines pour fermer sur commande l'alimentation de ladite turbine. Il est ainsi possible de concentrer le flux de gaz d'échappement sur l'une seulement des turbines, dans le cas où celui-ci est faible, ou vers les deux turbines dans le cas où celui-ci est important. La turbine en fonctionnement peut alors travailler avec un rendement plus important que si le flux est divisé par deux.

Pour les deux modes de réalisation, selon un perfectionnement, l'une au moins des turbines est à géométrie variable.

Selon un autre perfectionnement, pour l'une au moins des turbines, le système comporte une vanne de décharge en parallèle de ladite turbine. L'une et l'autre de ces solutions permettent d'étendre la plage de fonctionnement des turbines en fonction de la valeur de débit de gaz d'échappement.

Pour chaque version avec possibilité de modulation du fonctionnement des turbines, il est possible de moduler la contre-pression à l'échappement du moteur, soit en l'augmentant au maximum lorsque l'on cherche à optimiser le frein moteur, soit en la réduisant afin d'améliorer le fonctionnement du moteur thermique et donc son rendement.

Selon un troisième mode de réalisation, la première turbine comporte au moins une entrée, la deuxième turbine comporte une première et une deuxième entrée, la première entrée de la deuxième turbine étant alimentée par une conduite d'alimentation connectée également à l'entrée de la première turbine par l'intermédiaire d'une vanne de sélection, la sortie de la première turbine étant connectée à la deuxième entrée de la deuxième turbine, le système comportant en outre deux vannes de décharge en parallèle de chacune des turbines.

Selon une disposition particulière, possible pour tout mode de réalisation, le système comporte en outre un turbocompresseur dont la sortie d'une turbine de turbocompresseur est connectée à l'entrée de la première turbine. La priorité est ainsi donnée à l'utilisation de l'énergie des gaz d'échappement pour la suralimentation du moteur thermique, la génératrice électrique récupérant le reste de l'énergie.

Selon un perfectionnement, une vanne de décharge est connectée en parallèle de la turbine du turbocompresseur. La vanne de décharge permet de détourner une partie au moins du flux de gaz d'échappement de la turbine du turbocompresseur vers la première turbine, et de récupérer ainsi l'énergie des gaz d'échappement quand celle-ci n'est pas utilisable par le turbocompresseur.

Selon un autre perfectionnement, la turbine du turbocompresseur est à géométrie variable. Cette technique permet également de laisser passer une part importante du flux de gaz d'échappement sans récupérer son énergie. Celle-ci est alors disponible en aval pour la génératrice électrique.

Selon d'autres disposition
- le système comporte au moins un palier entre chaque roue et le rotor pour monter l'arbre rotatif ; ainsi les roues sont soutenues au plus près en limitant le porte-à-faux de l'arbre ;
- les roues sont d'un type radial, axial ou à flux mixte ;
- l'une au moins des turbines comporte au moins deux roues ;
- la génératrice électrique comporte des moyens de refroidissement.

### BRÈVE DESCRIPTION DES FIGURES

L'invention sera mieux comprise et d'autres particularités et avantages apparaîtront à la lecture de la description qui va suivre, la description faisant référence aux dessins annexés parmi lesquels :
- la figure 1 est une vue schématique d'un système conforme à un premier mode de réalisation de l'invention ;
- les figures 2 à 7 sont des vues similaires à la figure 1 de variantes du premier mode de réalisation ;
- la figure 8 est une vue schématique d'un système conforme à un deuxième mode de réalisation de l'invention ;
- les figures 9 à 13 sont des vues similaires à la figure 8 de variantes du deuxième mode de réalisation ;
- la figure 14 est une vue schématique d'un système conforme à un troisième mode de réalisation de l'invention ;
- la figure 15 est une vue similaire à la figure 14 d'une variante du troisième mode de réalisation
- la figure 16 est une vue schématique en coupe d'un système conforme à l'invention.

### DESCRIPTION DETAILLÉE

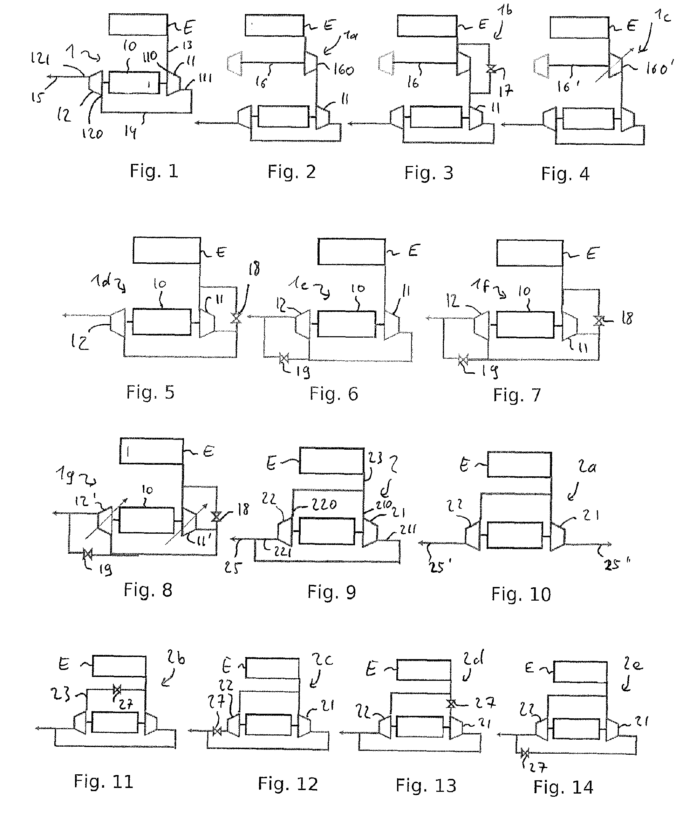

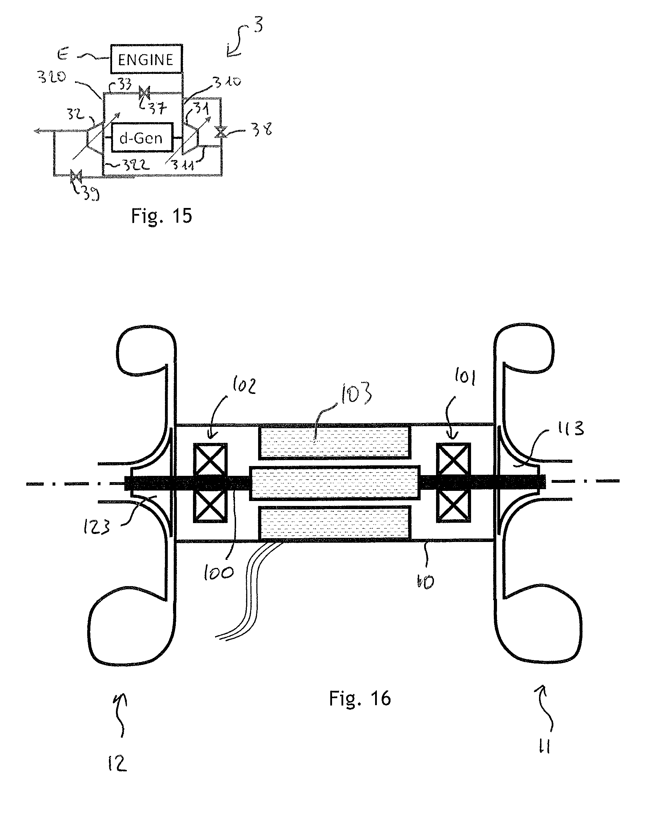

Dans un premier mode de réalisation de l'invention, tel que représenté sur la figure 1, le système 1 de récupération d'énergie selon l'invention est connecté à un moteur thermique E fournissant des gaz d'échappement chauds et sous pression. Le système 1 comporte une génératrice électrique 10 et deux turbines 11, 12. Comme on peut le voir sur la figure 16, un arbre 100 est monté rotatif sur deux paliers 101, 102 et porte le rotor 103 de la génératrice 10 entre les paliers 101, 102 et la roue 113, 123 de chaque turbine de part et d'autre des paliers 101, 102. Les roues 113, 123 peuvent être d'un type radial, axial ou à flux mixte. La génératrice électrique 10 comporte des moyens de refroidissement, non représentés.

Chaque turbine 11, 12 a une entrée 110, 120 et une sortie 111, 121 pour les gaz d'échappement. La première turbine 11 reçoit sur son entrée 110 les gaz d'échappement en provenance du moteur par l'intermédiaire d'une conduite d'alimentation 13. La deuxième turbine 12 reçoit sur son entrée 120 les gaz d'échappement en provenance de la sortie 111 de la première turbine 11 par l'intermédiaire d'une conduite de transfert 14. La sortie 121 de la deuxième turbine 12 est connectée à un réseau d'évacuation des gaz d'échappement 15, non détaillé.

Lors du fonctionnement, les gaz fournis par le moteur E traversent la première turbine 11 puis la deuxième turbine 12 avant d'être évacués par le réseau d'évacuation 15 des gaz d'échappement. L'utilisation de deux turbines sur le même arbre permet, en comparaison avec un système selon l'art antérieur avec une seule turbine, de diminuer la taille des turbines 11, 12, et donc de diminuer l'encombrement radial du système 1 de récupération d'énergie. Celui-ci peut alors plus facilement être intégré à un groupe motopropulseur.

Dans une première variante la du premier mode de réalisation, représenté sur la figure 2, un turbocompresseur 16 est intercalé entre le moteur E et la première turbine 11. Plus précisément, les gaz d'échappement sortant du moteur E traversent une turbine 160 du turbocompresseur 16, puis la première turbine 11 et enfin la deuxième turbine 12, avant d'être évacués vers le réseau d'évacuation 15 des gaz d'échappement. Un tel système 1 de récupération d'énergie est apte à fournir également de l'air de suralimentation au moteur E.

Dans une deuxième variante 1b du premier mode de réalisation, représentée sur la figure 3, qui est une évolution de la première variante 1a, une vanne de décharge 17 est placée en parallèle de la turbine 160 du turbocompresseur 16. Cette vanne de décharge 17 peut être à deux états ou progressive. Elle permet de laisser passer une partie ou la totalité du flux des gaz d'échappement vers la première turbine 11 si le turbocompresseur 16 n'a pas besoin de plus d'énergie pour fournir l'air de suralimentation.

La troisième variante 1c, représentée sur la figure 4, se distingue de la première variante 1a par l'utilisation d'une turbine 160' de turbocompresseur 16' à géométrie variable. Une partie du flux des gaz d'échappement peut traverser la turbine 160' de turbocompresseur 16 sans céder d'énergie et alimenter la première turbine 11.

Dans la quatrième variante 1d, représentée sur la figure 5, une vanne de décharge 18 est placée en parallèle de la première turbine 11. La vanne de décharge 17 permet par exemple de laisser passer une partie du flux de gaz d'échappement si l'énergie électrique fournie par la génératrice électrique 10 ne peut pas être utilisée et de réduire ainsi la contre-pression à l'échappement du moteur E. Réciproquement, si une utilisation du système de récupération d'énergie est envisagée pour augmenter le frein moteur, cette contre-pression peut être augmentée au maximum. Un autre avantage est de pouvoir prévoir une première turbine 11 efficace pour les petits débits de gaz d'échappement et de pouvoir dériver le flux de gaz en limitant la contre-pression en amont pour les forts débits.

Dans une cinquième variante 1e, représentée sur la figure 6, une vanne de décharge 19 est placée en parallèle de la deuxième turbine 12. Les avantages sont similaires à ceux de la quatrième variante 1d.

Dans une sixième variante 1f, représentée sur la figure 7, une vanne de décharge 18 est placée en parallèle de la première turbine 11 et une autre vanne de décharge 19 est placée en parallèle de la deuxième turbine 12. En plus des avantages liés de la quatrième et de la cinquième variante, on peut dériver complètement le flux de gaz d'échappement si aucune énergie ne peut être absorbée par la génératrice 10. Un autre avantage est de pouvoir choisir une première turbine 11 différente de la deuxième turbine 12, chacune étant optimale sur une plage de fonctionnement différente, et de faire fonctionner au choix, l'une ou l'autre des turbines 11, 12, ou les deux turbines 11, 12 ensemble.

La figure 8 représente une septième variante 1g du premier mode de réalisation, similaire à la sixième variante 1f, dans laquelle les turbines 11", 12' sont à géométrie variable. Des tels moyens permettent d'optimiser la récupération d'énergie sur une très grande plage de fonctionnement du moteur E, tout en améliorant le rendement à la fois du système de récupération d'énergie et du moteur thermique, tout comme sa capacité en terme de frein moteur.

Un deuxième mode de réalisation du système 2 selon l'invention est proposé dans lequel les turbines 21, 22 sont connectées en parallèle. En se référant à la figure 9, une conduite d'alimentation 23 en provenance du moteur E se subdivise en deux et se connecte d'une part à l'entrée 210 de la première turbine 22 et d'autre part à l'entrée 220 de la deuxième turbine 22. Les sorties 211, 221 des deux turbines sont reliées ensemble et connectées à un réseau d'évacuation 25 des gaz, non détaillé. L'utilisation de deux turbines 21, 22 sur le même arbre permet, en comparaison avec un système selon l'art antérieur avec une seule turbine, de diminuer la taille des turbines, et donc de diminuer l'encombrement radial du système 2 de récupération d'énergie. Celui-ci peut alors plus facilement être intégré à un groupe motopropulseur. De plus, l'inertie des deux roues 113, 123 des turbines est plus faible que l'inertie d'une seule roue de même efficacité que la somme des deux turbines, mais de plus grande dimension.

Une première variante 2a du deuxième mode de réalisation est montrée sur la figure 10 et propose deux réseaux d'évacuation des gaz d'échappement 25', 25" distincts.

Dans une deuxième variante, montrée sur la figure 11, la branche de la conduite d'alimentation 23 vers la deuxième turbine 22 comporte une vanne de sélection 27. On peut ainsi fermer l'alimentation en gaz d'échappement de la deuxième turbine 22 et conduire la totalité du flux de gaz vers la première turbine 21. Ce mode de fonctionnement est intéressant lorsque le débit est faible. En effet, aux faibles débits, si on divise le flux par deux, la puissance reçue par la turbine est divisée par un facteur supérieur à deux. L'efficacité est donc plus grande en concentrant le flux vers une seule turbine 21. Par contre, aux hauts débits, il est utile de répartir le flux en deux pour limiter la contre pression en amont des turbines 21, 22. Les turbines 21, 22 ne sont pas nécessairement identiques, la première turbine 21 pouvant être choisie pour optimiser le fonctionnement à très bas débit. Dès que la première turbine 21 fournit sa puissance maximale, on ouvre la vanne de sélection 27 pour alimenter également la deuxième turbine 22 et limiter l'augmentation de la contre-pression. L'ouverture de la vanne de sélection 27 peut être progressive ou non.

Les figures 12, 13 et 14 montrent des variantes qui sont des évolutions de la deuxième variante 2b, dans lesquelles la vanne de sélection 27 est placée en aval de la deuxième turbine 22 (2c, figure 12), en amont de la première turbine 21 (2d, figure 13) ou en aval de la première turbine 21 (2e, figure 14). Les effets en sont les mêmes et les choix sont dictés par des contraintes d'implantation, de tenue mécanique ou thermique ou de robustesse.

Dans un troisième mode de réalisation du système 3 selon l'invention, représenté sur la figure 15, la première turbine 31 est alimentée directement par le moteur E, la deuxième turbine 32 est alimentée par le moteur E par l'intermédiaire d'une vanne de sélection 37 connectée sur une première entrée 320, tandis qu'une première vanne de décharge 38 est placée en parallèle de la première turbine 31 et qu'une deuxième vanne de décharge 39 est placée en parallèle de la deuxième turbine 32. La deuxième turbine 32 comporte en outre une deuxième entrée 322 connectée à la sortie 311 de la première turbine 31.

Si toutes les vannes de dérivation 38, 39 et de sélection 37 sont fermées, les turbines 31, 32 sont connectées en série. Si la vanne de sélection 37 est ouverte, les turbines fonctionnent en parallèle. Les vannes de dérivation 38, 39 permettent de limiter la contre-pression en amont de l'une ou l'autre des turbines 31, 32. Ce montage permet de multiples modes de fonctionnement dont les avantages peuvent se combiner en fonction du débit des gaz d'échappement.

L'invention n'est pas limitée aux modes de réalisation qui ont été décrits uniquement à titre d'exemples. L'une au moins des turbines peut comporter au moins deux roues et l'une au moins des turbines peut être du type à géométrie variable, quelqu'en soit son principe de réalisation.

## Revendications

1. Système de récupération d'énergie contenue dans les gaz d'échappement d'un moteur (E) thermique, le système (1, 2, 3) comportant une génératrice électrique (10) et une première turbine (11), un arbre (100) étant commun à un rotor (103) de la génératrice électrique (10) et une roue (113) de la turbine (11), **caractérisé en ce que** le système comporte en outre une deuxième turbine (12), une deuxième roue (123) de la deuxième turbine (12) étant montée sur l'arbre (100) à l'extrémité opposée à la première roue (113).

2. Système selon la revendication 1, dans lequel la première turbine (11) comporte une entrée (110) et une sortie (111) pour des gaz, la deuxième turbine (12) comporte une entrée (120) et une sortie (121) pour des gaz, la sortie de la première turbine (11) étant connectée à l'entrée de la deuxième turbine (12) par une conduite de transfert (14).

3. Système selon la revendication 1, dans lequel chaque turbine (21, 22) comporte au moins une entrée (210, 220), le système comportant une conduite d'alimentation (13) qui relie les entrées (210, 220) de la première (21) et de la deuxième turbine (22) pour alimenter les turbines en parallèle.

4. Système selon la revendication 3, **caractérisé en ce qu'**il comporte une vanne de sélection (27) en amont ou en aval de l'une des turbines (22) pour fermer sur commande l'alimentation de ladite turbine (22).

5. Système selon la revendication 1, dans lequel l'une au moins des turbines (11', 12') est à géométrie variable.

6. Système selon la revendication 1, **caractérisé en ce que**, pour l'une au moins des turbines, il comporte une vanne de décharge (18, 19) en parallèle de ladite turbine (11, 12).

7. Système selon la revendication 1, dans lequel la première turbine (31) comporte au moins une entrée (310), la deuxième turbine (32) comporte une première (320) et une deuxième entrée (322), la première entrée (320) de la deuxième turbine (32) étant alimentée par une conduite d'alimentation (33) connectée également à l'entrée de la première turbine (31) par l'intermédiaire d'une vanne de sélection (37), la sortie (311) de la première turbine (31) étant connectée à la deuxième entrée (322) de la deuxième turbine (12), le système comportant en outre deux vannes de décharge (38, 39) en parallèle de chacune des turbines (31, 32).

8. Système selon la revendication 1, **caractérisé en ce qu'**il comporte en outre un turbocompresseur (16) dont la sortie d'une turbine (160) de turbocompresseur (16) est connectée à l'entrée (110) de la première turbine (11).

9. Système selon la revendication 8, dans lequel une vanne de décharge (17) est connectée en parallèle de la turbine (160) du turbocompresseur (16).

10. Système selon la revendication 8, dans lequel la turbine (160') du turbocompresseur (16') est à géométrie variable.

11. Système selon la revendication 1, **caractérisé en ce qu'**il comporte au moins un palier (101, 102) entre chaque roue (113, 123) et le rotor (103) pour monter l'arbre (100) rotatif.

12. Système selon la revendication 1, dans lequel les roues (113, 123) sont d'un type radial, axial ou à flux mixte.

13. Système selon la revendication 1, dans laquelle l'une au moins des turbines comporte au moins deux roues.

14. Système selon la revendication 1, dans lequel la génératrice électrique (10) comporte des moyens de refroidissement.
